# EUROPÄISCHE PATENTSCHRIFT

(11) **EP 2 750 828 B1**
(45) Veröffentlichungstag und Bekanntmachung des Hinweises auf die Patenterteilung: **31.10.2018**
(21) Anmeldenummer: 12751550.0
(22) Anmeldetag: 31.08.2012
(51) Int. Cl.: B23Q 3/155, B23Q 3/157

(54) **SYSTEM ZUM WECHSELN VON WERKZEUGEN AN EINER WERKZEUGMASCHINE**
SYSTEM FOR CHANGING TOOLS ON A MACHINE TOOL
SYSTÈME DE CHANGEMENT D'OUTIL SUR UNE MACHINE-OUTIL

(30) Priorität: 02.09.2011 DE 102011082050
(43) Veröffentlichungstag der Anmeldung: 09.07.2014
(73) Patentinhaber: DECKEL MAHO Pfronten GmbH, 87459 Pfronten (DE)
(72) Erfinder: JUNG, Robert, 87459 Pfronten (DE)
(74) Vertreter: MERH-IP Matias Erny Reichl Hoffmann Patentanwälte PartG mbB
(86) Internationale Anmeldenummer: PCT/EP2012/067026
(87) Internationale Veröffentlichungsnummer: WO 2013/030373

(56) Entgegenhaltungen:
- JP-A- 60 099 541
- US-A- 4 156 962

## Beschreibung

Die vorliegende Erfindung betrifft ein System zum Wechseln und Einlegen bzw. Vorlegen von Werkzeugen an einer Werkzeugmaschine und eine Werkzeugmaschine zum Bearbeiten eines Werkstücks mit einem Werkzeugwechselsystem.

### Hintergrund der Erfindung

Systeme zum Wechseln und Einlegen bzw. Vorlegen von Werkzeugen an einer Werkzeugmaschine und Werkzeugmagazine zur Werkzeugbevorratung einer Werkzeugmaschine sind aus dem Stand der Technik in unterschiedlichen Ausführungen bekannt. Werkzeugwechselsysteme werden beispielsweise in Fräsbearbeitungszentren eingesetzt, um die Nebenzeiten der jeweiligen Bearbeitungsmaschine, beispielsweise die sogenannten Span-zu-Span-Zeiten, zu verringern.

Mit Hilfe derartiger Werkzeugwechselsysteme werden Werkzeuge bei Bedarf aus dem Werkzeugmagazin in eine Bearbeitungsspindel einer Werkzeugmaschine und umgekehrt gewechselt. Dies geschieht gegebenenfalls vollautomatisiert und programmgesteuert. Die Werkzeugmagazine nehmen hierzu eine Mehrzahl von Werkzeugen zur Werkzeugbevorratung auf und umfassen weiterhin einen Manipulator zur Entnahme der Werkzeuge aus dem Werkzeugmagazin, mittels dessen diese einer Werkzeugmaschine zugeführt werden können.

Hierbei sind aus dem Stand der Technik insbesondere zwei grundlegende Typen von Werkzeugmagazinen bekannt, die sich darin unterscheiden, dass entweder die Werkzeuge in einer ortsfesten, unbeweglichen Werkzeugaufnahme gelagert sind und ein beweglicher Manipulator zur Lagerposition des Werkzeugs fährt, um dort das Werkzeug mittels einer Entnahmeeinrichtung zu entnehmen, oder dass das Aufnahmemittel zum Lagern bzw. Aufnehmen der Werkzeuge zu einer vorbestimmten Entnahmeposition verfahren wird, an der das gewünschte Werkzeug von der Entnahmeeinrichtung des ortsfesten Manipulators entnommen wird.

Beispielsweise sind aus dem Stand der Technik Kettenmagazine für Werkzeugmaschinen mit starrem Manipulator z.B. aus der DE 39 05 780 C1 und der DE 10 2005 052353 A1 bekannt. Derartige Kettenmagazine umfassen eine Kette, die entlang ihres Verlaufs eine Mehrzahl von Aufnahmemitteln oder Aufnahmeabschnitten zur Aufnahme von Werkzeugen umfasst, wobei die Kette zumindest teilweise entlang einer Führungsschiene geführt wird.

Jedoch ist es für die flexible Bearbeitung von Werkstücken an mordernen Bearbeitungszentren insbesondere erforderlich, eine große Anzahl verschiedener Werkzeuge in einem Werkzeugmagazin bereitzustellen, wobei bei den vorstehend beschriebenen Kettenmagazinen hierbei das Problem auftritt, dass für die Werkzeugbevorratung von einer großen Anzahl von Werkzeugen entweder eine Mehrzahl an Ketten bzw. Kettenmagazinen oder unvorteilhaft lange Ketten bereitgestellt werden müssen. Dies führt dazu, dass eine große Aufstellfläche für das Kettenmagazin benötigt wird, und weiterhin treten bei Kettenmagazinen gegebenenfalls lange Werkzeug-Bereitstellungszeiten auf, wenn ein Werkzeug aus dem Kettenmagazin entnommen werden soll, das an der Kette des Kettenmagazins entfernt von dem Manipulator aufgenommen ist.

Weiterhin sind aus dem Stand der Technik Regalmagazine mit starren Aufnahmemitteln und einer zum Entnehmen der Werkzeuge steuerbaren Entnahmeeinrichtung, z.B. aus der DE 10 334 346 A1, bekannt.

Jedoch tritt bei Regalmagazinen nach dem Stand der Technik das Problem auf, dass für das Lagern einer großen Anzahl von unterschiedlichen Werkzeugen abhängig von der Werkzeugbevorratung und den Steuermöglichkeiten durch die Entnahmeeinrichtung eines Manipulator gegebenenfalls lange Werkzeug-Bereitstellungszeiten auftreten und in gleicher Weise große Aufstellflächen für das Regalmagazin benötigt werden.

Aus der DE 10 2004 028 151A1 ist eine Speicheranordnung für Bearbeitungsmaschinen bekannt, mit übereinander angeordneten Lagertablaren, an deren Unterseite Werkzeughalterungen befestigt sind, die kreisförmig angeordnet sind und aus denen mittels eines beweglichen Greifarms Werkzeuge entnommen werden können. Die Entnahme der Werkzeuge erfolgt dabei in einer Richtung senkrecht zur gehalterten Werkzeugachse und nach radial innen durch den Greifarm. Ein ähnlich aufgebautes Werkzeugmagazin ist in der DE 4116 091 C1 beschrieben. Auch hier sind die Werkzeugaufnahmen auf einem Kreis angeordnet und werden mittels einer zentral zum Kreisbogen angeordneten Wechselvorrichtung nach radial innen entnommen. Ebenso ist in der DE 10 2009 008 647 A1 ein Werkzeugwechselsystem beschrieben, bei dem die Werkzeuge innerhalb des Werkzeugmagazins auf verschiedenen Ebenen in Aufnahmefächern gelagert sind, die entlang eines Kreisbogens angeordnet sind.

Die US 4 394 908 A offenbart ein Werkzeugmagazin, bei dem Werkzeuge entlang des Umfangs zweier kreisförmiger, in radialer Richtung übereinander angeordneter Aufnahmescheiben gehaltert sind. Die Werkzeuge sind in Aufnahmebehältern gelagert, wobei die Aufnahmebehälter und die Werkzeuge der oberen Scheibe im Vergleich zu den Aufnahmebehälter und den Werkzeugen der unteren Scheibe gekippt ausgerichtet sind. Nachteilig an diesem Werkzeugmagazin ist, dass zur Entnahme eines Werkzeugs aus der oberen Scheibe der entsprechende Behälter erst in eine Freiposition der unteren Scheibe abgesenkt werden muss, da der Werkzeugwechsel nur in einer vorbestimmten Wechselposition die Werkzeuge entnehmen kann. Dies erhöht die Werkzeugwechselzeiten. Zudem funktioniert der Konstruktionsmechanismus nur bei höchstens zwei übereinander angeordneten Scheiben und skaliert damit nicht. Somit ist der Aufnahmeplatz für Werkzeuge begrenzt.

Hingegen offenbart die DE 197 08 096 A1 ein Bearbeitungszentrum mit einem Werkzeugspeicher, aus dem die Werkzeuge nach radial außen der Arbeitsspindel direkt zugeführt werden, ohne dass ein Manipulator vorgesehen ist, der die Werkzeuge zunächst dem Magazin entnimmt und dann der Arbeitsspindel zuführt. Derartige kreis- bzw. säulenartige Werkzeugmagazine können, ähnlich wie Kettenmagazine, eine hohe Anzahl Werkzeuge lagern, bei im Vergleich zu Regalmagazinen schnelleren Zugriffszeiten auf die Werkzeuge. In der Praxis müssen dennoch oftmals Regalmagazine eingesetzt werden, wenn aufgrund des eingeschränkten Stellplatzes neben einer Werkzeugmaschine nur ein Regalmagazin mit schmaler Breite eingesetzt werden kann.

Die US 2007 / 0 167 303 A1 offenbart ein Werkzeugmagazin, bei dem die Werkzeuge entlang eines Kreisbogens verfahrbar gehaltert sind und die Werkzeuge in einer Ebene senkrecht zu einer Bodenfläche angeordnet sind. Entlang des kreisförmigen Umfangs können jeweils zwei Werkzeuge in einer Doppelhalterung gelagert werden. Nachteilig an diesem Werkzeugmagazin sind die langen Werkzeugwechselzeiten, da Werkzeuge auf der vom Werkzeugwechsler gegenüberliegenden Seite nur durch mehrmalige, abwechselnde Drehbewegungen des Radmagazins und Verfahrbewegungen des Manipulators gewechselt werden können. Zudem ist die Aufnahmekapazität begrenzt, da der beschriebene Werkzeugwechsel nur für ein einzelnes Radmagazin ausführbar ist.

Die US 4 156 962 A betrifft ein Werkzeugwechselsystem nach dem Oberbegriff des Anspruchs 1 für ein Werkzeugmagazin mit einer Vielzahl von unabhängig voneinander rotierbaren Trommeln, welche koaxial ausgerichtet sind. Jede Trommel weist mehrere Öffnungen auf, in denen die Werkzeuge angeordnet werden können. Der Werkzeugtransportmechanismus bewegt sich parallel zur Achse der Trommeln, um selektiv ein Werkzeug auszuwählen und zu entnehmen.

Die JP 60 099541 A betriff einen automatisierten Werkzeugwechsler für eine Werkzeugmaschine. Ein oberes und unteres Magazin, in welchem Werkzeuge vorgesehen sein können, können separat rotiert werden an einer Lagerung an einen Rahmen.

### Zusammenfassung der Erfindung

Eine Aufgabe der Erfindung ist es somit, ein System zum Wechseln und Einlegen bzw. Vorlegen von Werkzeugen an einer Werkzeugmaschine, ein Werkzeugmagazin zum Lagern von Werkzeugen und eine Werkzeugmaschine zum Bearbeiten eines Werkstücks mit einem System zum Wechseln und Einlegen bzw. Vorlegen von Werkzeugen an der Werkzeugmaschine bereitzustellen, bei denen die vorstehend genannten Probleme der aus dem Stand der Technik bekannten Ketten-, Regal- und Kreismagazine gelöst werden.

Insbesondere ist es eine weitere Aufgabe der Erfindung, ein System zum Wechseln und Einlegen bzw. Vorlegen von Werkzeugen an einer Werkzeugmaschine, ein Werkzeugmagazin mit kompakten Abmaßen zum Aufnehmen von Werkzeugen und eine Werkzeugmaschine mit einem System zum Wechseln und Einlegen bzw. Vorlegen von Werkzeugen an der Werkzeugmaschine bereitzustellen, bei denen eine große Anzahl von Werkzeugen unterschiedlichen Typs und unterschiedlicher Größe zum Lagern der Werkzeuge aufgenommen werden können und kurze Werkzeug-Bereitstellungszeiten für die aufgenommenen Werkzeuge ermöglicht sind.

Die vorstehend beschriebenen Aufgaben werden erfindungsgemäß gelöst durch ein System zum Wechseln und Einlegen bzw. Vorlegen von Werkzeugen an einer Werkzeugmaschine nach Anspruch 1 und eine Werkzeugmaschine nach Anspruch 11. Bevorzugte Ausführungsbeispiele der Erfindung werden in den abhängigen Ansprüchen beschrieben.

Ein System zum Wechseln und Einlegen bzw. Vorlegen von Werkzeugen an einer Werkzeugmaschine umfasst mindestens ein
rotierbares Werkzeugmagazin zur Aufnahme einer Mehrzahl von Werkzeugen, in dem die Werkzeuge in Werkzeugaufnahmen entlang des Umfangs des Werkzeugmagazins derart gehaltert sind, dass die Längsachsen der Werkzeuge innerhalb eines rotierbaren Werkzeugmagazins in einer Ebene liegen und vom Umfang des Werkzeugmagazins abstehen, wobei die Werkzeuge entlang des Umfangs des Werkzeugmagazins verfahren werden können um sie in eine für die Entnahme geeignete Position zu verfahren. Weiterhin umfasst das Werkzeugwechselsystem einen Manipulator zur Entnahme der Werkzeuge aus dem Werkzeugmagazin.

Diese Anordnung ermöglicht eine platzsparende Bauweise des Werkzeugmagazins, dessen Breite im Wesentlichen durch die Breite der Werkzeuge bestimmt ist. Die Werkzeuge werden vorzugsweise innerhalb der Ebene, in der die Längsachsen der Werkzeuge liegen, verfahren. Vorzugsweise sind die Werkzeuge an einem ersten Endbereich ihrer Längsachsen, d.h. an einem ersten Längsende, in den Werkzeugaufnahmen aufgenommen, so dass ein zweiter gegenüberliegender Endbereich, d.h. das gegenüberliegende Längsende der Werkzeuge, nach außen oder innen absteht. In dieser Position sind die Werkzeuge verriegelt. Mit anderen Worten sind die Werkzeuge nur an einem Endpunkt am Umfang des Werkzeugmagazins gehaltert.

Das erfindungsgemäße System zum Wechseln und Einlegen von Werkzeugen mit einem Werkzeugmagazin, an dem die Werkzeuge entlang des Umfangs des Werkzeugmagazins gehaltert sind und vom Umfang abstehen, ermöglicht eine besonders leichte und schmale Konstruktion des Werkzeugmagazins bei gleichzeitig hoher Werkzeugdichte, da keine zusätzlichen Fächer oder sonstigen Lagerflächen benötigt werden, um den Werkzeugkörper aufzunehmen.

Um die Werkzeuge möglichst dicht am Umfang anordnen zu können, stehen die Werkzeuge vorzugsweise derart vom Umfang des Werkzeugmagazins nach außen oder innen ab, dass ihre Längsachsen einen Normalenvektor zum Umfang des Werkzeugmagazins bilden. Mit anderen Worten sind die Werkzeuge in Längsrichtung vorzugsweise orthogonal an der Außenumfangslinie des Werkzeugmagazins angeordnet, so dass die Längsachse der Werkzeuge senkrecht auf dem Tangentialvektor an dem Punkt steht, an dem das Werkzeug am Umfang an der Werkzeugaufnahme gehaltert ist.

Vorzugsweise stehen die Werkzeuge mit dem Längsende, das nicht am Umfang des Werkzeugmagazins befestigt ist, nach außen ab. Die vom Außenumfang des Radmagazins abstehende sternförmige Anordnung der Werkzeuge bietet auch Werkzeugen, deren Werkzeugkörper einen größeren Durchmesser hat, genügend Raum und nutzt den Außenraum außerhalb des Außenumfangs des Werkzeugmagazins optimal aus.

Vorzugsweise ist der Manipulator in Bezug auf das Werkzeugmagazin seitlich und außenseitig angeordnet. Der außenseitig angeordnete Manipulator zur Entnahme der Werkzeuge aus dem Werkzeugmagazin kann dadurch vorteilhaft zwischen Werkzeugmagazin und Spindel der Werkzeugmaschine positioniert werden. In Verbindung mit dem rotierbaren Werkzeugmagazin, das das benötigte Werkzeug an einer vorbestimmten Entnahmeposition bereitstellen kann, ergeben sich somit kurze, einfache Zustellwege für den Manipulator vom Werkzeugmagazin zur Werkzeugspindel.

Vorzugsweise ist das Werkzeugmagazin derart angeordnet ist, dass die durch die Längsachsen der Werkzeuge aufgespannte Ebene senkrecht zu einer Bodenfläche ausgerichtet ist. Mit anderen Worten steht das flache Werkzeugmagazin aufrecht und kann dadurch an der Längsseite einer Werkzeugmaschine angeordnet werden. Dies ermöglicht eine besonders kompakte Baubreite bzw. Aufstellfläche (sog. Footprint) des Werkzeugwechselsystems bzw. eines Systems bestehend aus Werkzeugmaschine und dem erfindungsgemäßen Werkzeugwechselsystem, da die Breite des erfindungsgemäßen Werkzeugmagazins nicht durch dessen Durchmesser, wie bei herkömmlichen, horizontalen Systemen, bestimmt ist, sondern im Wesentlichen durch die Werkzeugbreite, da diese in Längsrichtung in einer Ebene angeordnet und ohne Fächer oder andere sperrige Aufnahmen am Außenumfang des Werkzeugmagazins befestigt sind.

Hierdurch ist es möglich, ein Werkzeugwechselsystem mit einer umfangsseitigen Werkzeuglagerung auch erstmals in Verbindung mit Werkzeugmaschinen einzusetzen, bei denen bisher aufgrund des eingeschränkten Stellplatzes neben der Werkzeugmaschine nur Regalsysteme zum Werkzeugwechseln verwendet werden konnten.

Vorzugsweise sind die Werkzeuge in den Werkzeugaufnahmen mittels einer Rastverbindung, eines Klinkenmechanismus oder eines Kupplungsmechanismus gehaltert. Dies hat den Vorteil, dass die Werkzeuge kompakt nebeneinander ohne zusätzliche Zwischenräume, Fächer oder sonstige Ablageelemente am Radmagazin angebracht werden können. Die Erfindung ist nicht auf diese Verbindungsmechanismen beschränkt; jeder lösbare Verbindungsmechanismus, der eine sichere Verriegelung der Werkzeuge in ihren Halterungspositionen am Umfang des Werkezugmagazins ermöglicht, so dass die Werkzeuge bei einer Rotationsbewegung des Werkzeugmagazins an diesem sicher befestigt sind und gleichzeitig von einem Manipulator schnell und einfach entnommen werden können, kann für das erfindungsgemäße Werkzeugwechselsystem zum Einsatz kommen. Desweiteren können die Werkzeugaufnahmen als separate Werkzeugaufnahmen, die am Außenumfang des Werkzeugmagazins befestigt sind, oder als im Werkzeugmagazin integrierte oder eingeformte Werkzeugaufnahmen oder durch Kupplungsstücke realisiert werden.

Vorzugsweise ist das Werkzeugmagazin als Radmagazin ausgebildet, in dem die Werkzeuge in Werkzeugaufnahmen entlang des Umfangs des Radmagazins derart gehaltert sind, dass die Längsachsen der Werkzeuge in radialer Richtung vom Außenumfang des Radmagazins nach außen abstehen. Dies bedeutet, dass die Werkzeuge entlang des Umfangs des Radmagazins derart angeordnet sind, dass sich die gedachten Verlängerungen der Längsachsen der Werkzeuge im Mittelpunkt des Radmagazins schneiden. Die Enden der Längsachsen der Werkzeuge, die nicht am Außenumfang des Radmagazins gehaltert sind, stehen sternförmig von diesem nach außen ab. Das Radmagazin ist vorzugsweise ringförmig bzw. als ringförmiger Hohlzylinder ausgebildet. Die Kreisform ermöglicht eine hohe Werkzeugdichte entlang des Außenumfangs bei kompakten Abmaßen und schnellen Zugriffszeiten, sowie eine leichte und kostengünstige Bauweise.

Weiter vorzugsweise ist das Radmagazin derart angeordnet, dass die Rundachse des Radmagazins parallel zu einer Bodenfläche ausgerichtet ist. Mit anderen Worten steht das Radmagazin aufrecht und kann dadurch an der Längsseite einer Werkzeugmaschine angeordnet werden. Dies ermöglicht wiederum eine besonders kompakte Baubreite eines Systems aus Werkzeugmaschine und dem erfindungsgemäßen Werkzeugwechselsystem, da die Breite des erfindungsgemäßen Werkzeugmagazins im Wesentlichen durch die schmale Breite des Radmagazins und nicht durch dessen Durchmesser, wie bei herkömmlichen, horizontalen Systemen bestimmt ist.

Das erfindungsgemäße Werkzeugwechselsystem weist mindestens n Werkzeugmagazine auf, mit n≥2, die hintereinander angeordnet sind, so dass die Ebenen, die durch die Längsachsen der Werkzeuge jedes Magazins aufgespannt werden, parallel zueinander sind. Dabei können diese n Werkzeugmagazine als n Radmagazine ausgebildet sein, die in Richtung der Rundachse hintereinander angeordnet sind. Durch eine derartige Anordnung kann die Werkzeugdichte mit jedem zusätzlichen Werkzeugmagazin bzw. Radmagazin beliebig erhöht werden - bei nur geringfügig ansteigender Gesamtbreite. Die Gesamtbreite der Anordnung erhöht sich mit jedem zusätzlichen Werkzeugmagazin nur um die Breite des flachen Werkzeugmagazins, beispielsweise um die Breite des Radmagazins, die wiederum im Wesentlichen nur durch die Werkzeugbreite bestimmt ist, da keine sperrigen, die Werkzeugkörper umgebenden Regalelemente benötigt werden.

Ein weiterer Vorzug der Erfindung liegt darin, dass jedes der n Werkzeugmagazine über einen oder mehrere Antriebe unabhängig von den anderen Werkzeugmagazinen antreibbar sein kann, um eine Rotationsbewegung auszuführen. Dies hat den Vorteil, dass nur dasjenige Werkzeugmagazin, beispielsweise nur dasjenige Radmagazin, das das gewünschte Werkzeug enthält, bewegt werden muss. Weiterhin können bei vorbestimmten Produktionsabläufen, bei denen die Reihenfolge der benötigten Werkzeuge vorbestimmt ist, die verschiedenen Werkzeugmagazine bereits so in Richtung Spindel gedreht werden, dass die benötigten Werkzeuge bereits an oder nahe der Entnahmeposition des Manipulators positioniert sind, um die Wechselzeiten weiter zu reduzieren. Vorteilhafterweise sind die Radien der n Radmagazine im Wesentlichen gleich groß. Damit werden die Wege des Manipulators aus seiner Ruheposition zu einer Werkzeugwechselposition möglichst kurz gehalten. Es ist aber auch möglich, Werkzeuge mit verschiedenen Größenabmessungen auf Radmagazinen mit unterschiedlichen Durchmessern zu lagern.

Die Werkzeugmagazine weisen mit Ausnahme höchstens eines der äußeren Werkzeugmagazine an einer Stelle des Außenumfangs einen Freiplatz ohne Werkzeuge auf. Die Größe bzw. die Anzahl der Freiplätze richtet sich nach den Abmaßen des Manipulators. Die Freiplätze können als Aussparungen am Umfang des Werkzeugmagazins oder durch unbestückte Werkzeugplätze realisiert werden. Vorzugsweise werden zur Entnahme eines Werkzeugs im m-ten Werkzeugmagazin zumindest die Werkzeugmagazine, die zwischen dem m-ten Werkzeugmagazin und dem Manipulator angeordnet sind, derart um die Rundachse gedreht, dass ihre Freiplätze einen Zugang des Manipulators zum m-ten Werkzeugmagazin ermöglichen.

Die n Werkzeugmagazine weisen mit Ausnahme höchstens eines der äußeren Werkzeugmagazine an einer Stelle des Umfangs einen Freiplatz ohne Werkzeuge auf. Die Größe bzw. die Anzahl der Freiplätze richtet sich nach den Abmaßen des Manipulators. Die Freiplätze können als Aussparungen am Umfang des Werkzeugmagazins oder durch unbestückte Werkzeugplätze realisiert werden. Zur Entnahme eines Werkzeugs im m-ten Magazin werden zumindest die Magazine, die zwischen dem m-ten Magazin und dem Manipulator entlang der Rundachse angeordnet sind, derart um die Rundachse gedreht, dass ihre Freiplätze entlang der Rundachse einen Zugang des Manipulators zum m-ten Magazin ermöglichen.

Durch die entstehende "Lücke" in der Werkzeuganordnung kann der Manipulator seitlich in Richtung der Rundachse bis zum m-ten Werkzeugmagazin hindurch bewegt werden, um dann mit einer radialen Greifbewegung das gewünschte Werkzeug des m-ten Werkzeugmagazins zu entnehmen und anschließend wieder durch den Zugang aus dem Werkzeugmagazin seitlich herauszufahren. Dadurch ist es möglich, ein Werkzeug mit nur einer Linearbewegung aus dem Werkzeugmagazin zu entnehmen bzw. zurückzugelegen. Beispielsweise muss der Manipulator höchsten bis zum m-ten Werkzeugmagazin seitlich verfahren werden, nicht aber darüber hinaus. Mit einer 2-Punkt Seitwärtsbewegung (Linearbewegung) kann jedes Werkzeug aus jedem Werkzeugmagazin entnommen werden. In diesem Fall verfährt der Manipulator von seiner Park- oder Werkzeugübergabeposition seitlich außerhalb des Werkzeugmagazins bis zum oder höchstens bis zum m-ten Werkzeugmagazin entlang des Durchgangs der Freiplätze und zurück.

Dies hat den Vorteil, dass der Manipulator jedes beliebige Werkzeug im Magazin mit einer schnellen, vorzugsweise Linearbewegung erreichen kann. Dies verkürzt die Transportwege des Manipulators und damit die Werkzeugwechselzeiten. Zudem wird eine kompaktere Baugröße ermöglicht, da der Manipulator seitlich vom Werkzeugmagazin positioniert werden kann.

Genauer gesagt lässt sich bereits durch die erfindungsgemäße Ausgestaltung mit mehreren hintereinander angeordneten und unabhängig voneinander rotierbaren Werkzeugmagazinen, in denen die Werkzeuge wie oben beschrieben angeordnet sind, die Anzahl von Werkzeugen, die in einer vorgegebenen (kurzen) Zeitspanne und/oder bei einem vorgegebenen (kurzen) Verfahrweg des Manipulators von der Entnahmeposition des Werkzeugs an dem Werkzeugmagazin bis hin zu einer Übergabeposition des Manipulators an eine Übergabeeinrichtung oder direkt an die Arbeitsspindel vom Manipulator erreicht werden können, gegenüber sämtlichen bislang bekannten Werkzeugmagazinen des Stands der Technik ganz erheblich erhöht.

Durch Ausgestaltung der Werkzeugmagazine mit Freiplätzen, wie oben beschrieben, lässt sich die nötige Entnahmezeit und/oder der nötige Verfahrweg des Manipulators noch weiter verkürzen, zudem wird der Verfahrweg vereinfacht.

Vorzugsweise ist jedes der n Werkzeugmagazine entnehmbar, beispielsweise in einer Richtung senkrecht zur Ebene der Werkzeuglängsachsen, d.h. in Richtung in der die Werkzeugmagazine hintereinander "gestapelt" sind. Dies erhöht die Flexibilität und verkürzt die Zeit beim Rüsten des Werkzeugwechslers. Während das Werkzeugmagazin neu bestückt wird, kann die erfindungsgemäße Werkzeugwechselmaschine im Hauptbetrieb weiter betrieben werden, so dass unnötige Stillstandszeiten signifikant reduziert werden können. Das erfindungsgemäße Werkzeugwechselsystem bietet somit ein "Werkzeugmagazin im Werkzeugmagazin", da der modulare Aufbau mit den hintereinander angeordneten Radmagazinen ein schnelles und flexibles Erweitern des Werkzeugmagazins ermöglicht.

Die Ausführung des Werkzeugmagazins bei dem die Werkzeuge vom Außenumfang des Werkzeugmagazins nach außen abstehen, stellt eine bevorzugte Ausführungsform dar, bei der die Werkzeuge möglichst dicht entlang der Außenumfangslinie an einem Endpunkt ihrer Längsachse befestigt werden können. Zur Reduzierung des Gesamtdurchmessers des Werkzeugmagazins können die Werkzeuge auch derart am Umfang angeordnet werden, dass sie nach innen vom Umfang abstehen. In dieser Ausführungsform werden die Werkzeuge vorzugsweise etwas weiter am Umfang des Werkzeugmagazins beabstandet befestigt.

Die Ausführung des Werkzeugmagazins als starrer Ring bzw. als Radmagazin stellt eine bevorzugte Ausführungsform dar. Selbstverständlich ist es jedoch nicht erheblich, dass der Außenumfang ringförmig ausgebildet ist. So können bei Verwendung eines Kettenantriebs, bei dem die Werkzeugaufnahmen auf der Kette befestigt werden, die Werkzeuge mittels des Kettenantriebs in jede Position entlang der Außenumfangslinie verfahren werden. Damit kann der Außenumfang des Werkzeugmagazins, je nach Kettenführung, jede andere Umfangsform annehmen. Die Umfangsform kann beispielsweise aus Geradenabschnitten (bei einer Drei- oder Vierecksform) bestehen oder aus Kurvenabschnitten (bei einer kreisförmigen- oder elliptischen Form). Im Unterschied zu herkömmlichen Kettenmagazinen stehen die Längsachsen der Werkzeuge strahlenförmig nach außen oder innen ab, d.h. ihre Längsachse zeigen von der durch die Kette gebildeten Umfangsrichtung nach außen oder innen und liegen in einer Ebene.

Weiterhin können die Werkzeuge entlang des Außenumfangs des Werkzeugmagazins derart verfahren werden, dass sie eine 360°-Rundumbewegung ausführen. Alternativ kann die Rotationsbewegung des Werkzeugmagazins auch derart eingerichtet sind, dass die Werkzeuge nur entlang eines Teils des Außenumfangs verfahren werden können, z.B. in einem 180°-Grad Winkelbereich. In diesem Falle müsste das Werkzeugmagazin im und gegen den Uhrzeigersinn rotiert werden, um alle Werkzeuge an eine vorbestimmte Entnahmeposition zu verfahren, falls der Manipulator eingerichtet ist, die Werkzeuge immer nur an einer vorbestimmten Entnahmeposition zu entnehmen. Alternativ kann der Manipulator auch eingerichtet sein, die Werkzeuge an mehreren vorbestimmten Entnahmepositionen zu entnehmen, so dass vorzugsweise nur eine Rotation des Werkzeugmagazins in die nächstliegende Entnahmeposition für das benötigte Werkzeug ausgeführt werden muss.

Ein Werkzeugmagazin zum Lagern von einer Mehrzahl von Werkzeugen nach der vorliegenden Erfindung ist dadurch gekennzeichnet, dass das Werkzeugmagazin als Werkzeugmagazin eines der vorstehend beschriebenen Systeme zum Wechseln und Einlegen bzw. Vorlegen von Werkzeugen in einer Werkzeugmaschine ausgebildet ist.

Eine Werkzeugmaschine zum Bearbeiten eines Werkstücks nach der vorliegenden Erfindung umfasst eine Werkzeugwechseleinrichtung zum Wechseln eines Werkzeuges an der Werkzeugmaschine und eines der vorstehend beschriebenen Systeme zum Wechseln und Einlegen bzw. Vorlegen von Werkzeugen an der Werkzeugmaschine, wobei die Handhabungsvorrichtung des Werkzeugmagazins dazu geeignet ist, der Werkzeugwechseleinrichtung ein Werkzeug aus dem Werkzeugmagazin zuzuführen.

Die vorstehend beschriebene Zusammenfassung der Erfindung beschreibt im Wesentlichen das Entnehmen von in dem Werkzeugmagazin gelagerten Werkzeugen und das Zuführen eines Werkzeuges zu einer Werkzeugwechseleinrichtung zum Einwechseln bzw. Auswechseln des Werkzeuges an der Werkzeugmaschine. Jedoch ist das erfindungsgemäße System zum Wechseln und Einlegen bzw. Vorlegen von Werkzeugen an der Werkzeugmaschine, das erfindungsgemäße Werkzeugmagazin und die erfindungsgemäße Werkzeugmaschine vorzugsweise analog zu dem vorstehend beschriebenen Entnehmen und Zuführen von Werkzeugen ebenfalls dazu eingerichtet, Werkzeuge von der Werkzeugmaschine bzw. von der Werkzeugwechseleinrichtung durch Steuern bzw. Verfahren der Entnahmeeinrichtung den Radmagazinen des Werkzeugmagazins zur Lagerung zuzuführen.

### Kurze Beschreibung der Figuren

Fig. 1 zeigt ein System zum Wechseln und Einlegen bzw. Vorlegen von Werkzeugen nach einem nicht erfindungsgemäßen Ausführungsbeispiel in einer perspektivischen Ansicht;
Fig. 2 zeigt ein System zum Wechseln und Einlegen bzw. Vorlegen von Werkzeugen ohne Werkzeugmagazin nach einem nicht erfindungsgemäßen Ausführungsbeispiel in einer perspektivischen Ansicht;
Fig. 3 zeigt ein schematisches Ausführungsbeispiel der Erfindung fünf Radmagazinen; und
Fig. 4 zeigt das Ausführungsbeispiel aus Fig. 3 in einer Vorderansicht.

### Detaillierte Beschreibung der Figuren und bevorzugte Ausführungsbeispiele der vorliegenden Erfindung

Bevorzugte Ausführungsformen der vorliegenden Erfindung werden im Folgenden beispielsweise und exemplarisch unter Bezugnahme auf die beigefügten Zeichnungen näher beschrieben.

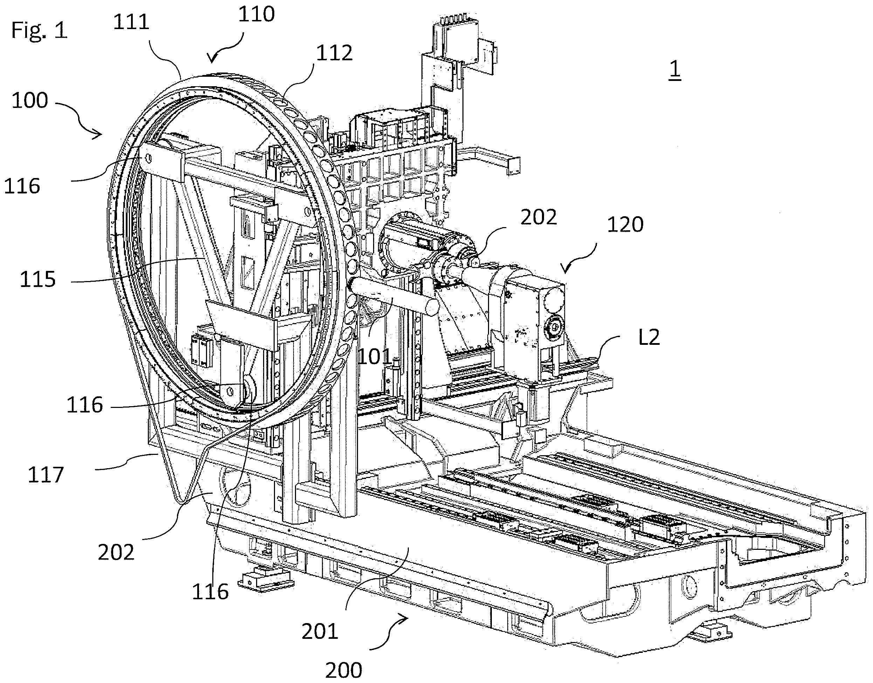

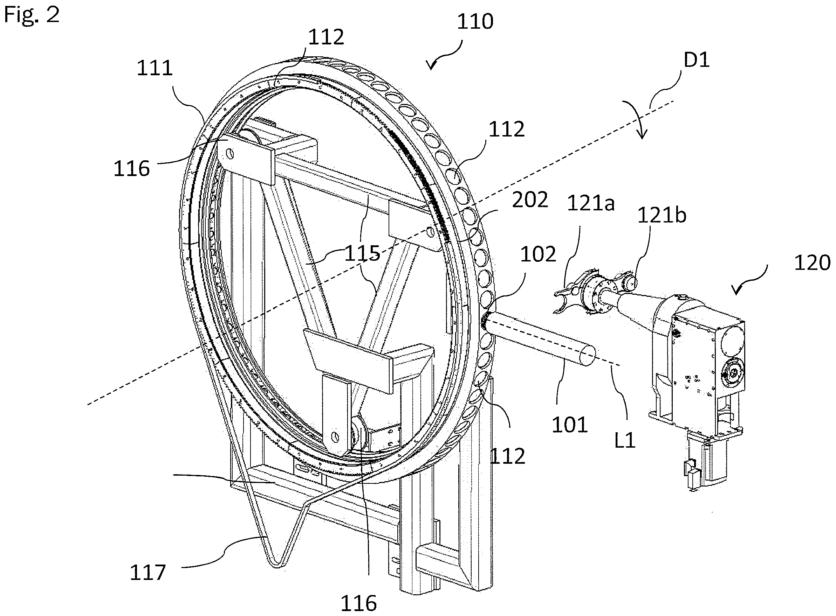

Fig. 1 zeigt ein System 1 zum Wechseln und Einlegen bzw. Vorlegen von Werkzeugen in einer Werkzeugmaschine bei dem das Werkzeugmagazin als Radmagazin ausgestaltet ist. Zur Verdeutlichung des Konstruktionsprinzips sind das Werkzeugmagazin und der Manipulator der Fig. 1 in Fig. 2 nochmals ohne Werkzeugmaschine dargestellt. Das System 1 umfasst ein Werkzeugmagazin 100, das in der hier gezeigten Ausführungsform über ein ringförmiges Radmagazin 110 verfügt, in dem jeweils eine Mehrzahl von Werkzeugen 101 zur Werkzeugbevorratung aufbewahrt werden können.

Die Werkzeuge 101 sind an einem Endpunkt 102 entlang des Umfangs 111 des Radmagazins 110 gehaltert. Das Radmagazin ist als ringförmiger Hohlzylinder ausgebildet. Entlang des Umfangs 111 des Radmagazins 110, d.h. entlang der äußeren Mantelfläche befinden sich Werkzeugaufnahmen 112, die eine lösbare Verbindung mit den Werkzeugen 101 eingehen können. In Fig. 1 sind die Werkzeugaufnahmen 112 als Lochstruktur entlang der äußeren Mantelfläche des Radmagazins angeordnet sind, was eine besonders leichte Bauweise ermöglicht. Die Werkzeuge werden in den Aufnahmen 112 aufgrund der Flieh- und der Gravitationskraft verriegelt. Im vorliegenden Beispiel wird hierzu eine Aktivverriegelung durch Rastverbindung mit den Werkzeugen realisiert, bei der die Werkzeuge in einer formschlüssigen Verbindung zwangsverriegelt werden. Zur Befestigung der Werkzeuge 101 in den Werkzeugaufnahmen 112 wird ein selbsthaltender Hohlschaft-Kegel mit Plananlage (HSK) als Schnittstelle verwendet (in den Figuren nicht dargestellt). Alternativ kann auch ein Steilkegel oder Morsekegel eingesetzt werden.

Die Werkzeuge sind somit nur an einem ihrer Längsenden 102 am äußeren Umfang des Radmagazins 110 befestigt, so dass die Werkzeuge in radialer Richtung vom Außenumfang des Radmagazins nach außen strahlenförmig abstehen. Dadurch liegen die Längsachsen der Werkzeuge, die in Fig. 2 durch eine gestrichelte Linie L1 illustriert ist, in einer Ebene. Dadurch können die Werkzeuge äußerst kompakt und dicht entlang des Umfangs 111 des Radmagazins 110 nebeneinander angeordnet werden.

Das Radmagazin kann mit allen gängigen Werkzeugen für die spanlose und spangebende Fertigung bestückt werden. Fig. 1 zeigt zur Verdeutlichung des Konstruktionsprinzips nur eine Bestückung mit einem Werkzeug 101.

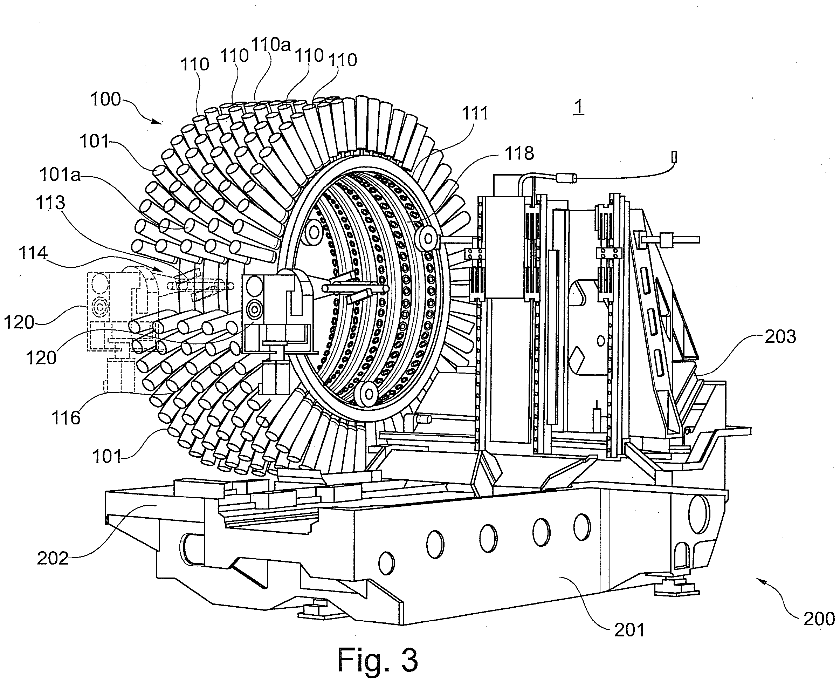

Im vorliegenden Ausführungsbeispiel hat das Radmagazin 63 Werkzeugaufnahmen, ist jedoch im Normalbetrieb nur mit 60 Werkzeugen bestückt. Die Funktion der dadurch entstehenden Freiplätze wird in Zusammenhang mit dem Einsatz mehrerer Radmagazine (siehe Fig. 3) näher erläutert.

Das Radmagazin ist mittels eines Dreiecksrahmens 115 gelagert, an dessen drei Endpunkten jeweils ein Laufrad 116 angeordnet ist. Neben der hier gezeigten Dreipunktlagerung ist auch eine Vier- oder Mehrpunktlagerung möglich. Anstatt des Dreiecksrahmens 115 kann das Radmagazin auch durch eine Mittelachse gelagert werden. Die Rotation des Radmagazins 110 erfolgt über einen Kettenantrieb, wobei in Fig. 1 lediglich die Antriebskette 117 dargestellt ist. Anstatt dem hier gezeigten Kettenantrieb kann das Radmagazin 110 auch direkt über ein Ritzel oder über Reibschluss angetrieben werden.

Das System umfasst weiterhin einen Manipulator 120 zur Entnahme der Werkzeuge 101 aus dem Werkzeugmagazin 100, so dass diese einer Werkzeugspindel 202 einer Werkzeugmaschine 200 zugeführt werden können. Bei der Werkzeugmaschine 200 kann es sich um eine aus dem Stand der Technik bekannte Werkzeugmaschine für die spangebende oder spanlose Fertigung handeln. Besonders vorteilhaft ist das System zum Wechseln und Einlegen bzw. Vorlegen von Werkzeugen für Universalbearbeitungszentren, da diese flexibel mit vielen unterschiedlichen Werkzeugen bestückt werden müssen. Eine möglichst kompakte Anordnung wird dann erreicht, wenn das Werkzeugmagazin 100 seitlich an das Bett 201 und Gestell 203 in aufrechter Position angebracht wird, um kurze Zustellwege des Manipulators 120 zur Spindel 202 zu ermöglichen. Durch die Möglichkeit einer aufrechten Positionierung der Radmagazine 110 kann das Werkzeugwechselsystem auch bei unterschiedlichen Gestellen und Bettformen fast immer möglichst nah an der Spindel positioniert werden.

Der Manipulator 120 aus dem Werkzeugmagazin 100 ist in Bezug auf das unbestückte Radmagazin 110 außenseitig, das heißt außerhalb des Umfangs des Radmagazins 110 angeordnet, so dass er die Werkzeuge 101 in Richtung der Rundachse des Radmagazins und/ oder in radialer Richtung vom Radmagazin 110 nach außen entnehmen kann. Der hier schematisch dargestellte Manipulator umfasst eine erste Linearachse L2, die dazu geeignet ist, den Manipulator in Richtung der Rundachse D1 des Radmagazins, das heißt in seitlicher Richtung zum Radmagazin zu verfahren um eine Horizontalbewegung zwischen Spindel 202 und Radmagazin 110 auszuführen. Der Manipulator 120 kann auch eine zweite Linearachse aufweisen (nicht gezeigt), die dazu geeignet ist, den Manipulator in der Wechselposition am Radmagazin in radialer Richtung zu verfahren.

Der Manipulator 120 ist zur Entnahme der Werkzeuge 101 im gezeigten Ausführungsbeispiel als Schwertwechsler mit Doppelgreifer ausgebildet, mit einer linksseitigen 121a und einer rechtsseitigen 121b Aufnahme. Der Doppelgreifer ermöglicht die gleichzeitige Aufnahme des zuletzt genutzten Werkzeugs und des nachfolgend benötigten Werkzeugs, so dass ein Werkzeugtausch mit nur einer Horizontalbewegung des Manipulators 120 zwischen Spindel 202 und Werkzeugmagazin 110 möglich ist.

Das Werkzeugmagazin 100 ist mit mehreren Radmagazinen 110 bestückt. Fig. 3 zeigt ein weiteres Ausführungsbeispiel mit fünf Radmagazinen. Zur Verdeutlichung des Konstruktionsprinzips wurden in Fig. 3 die übrigen Bestandteile wie die Antriebe und Lagerung der Radmagazine 110, die Linearachsen des Manipulators 120, die Steuereinheit zum automatisierten Werkzeugwechsel und dergleichen, die in üblicher Weise ausgeführt sind, nicht weiter dargestellt. Die Lagerung der Radmagazine ist schematisch durch die 3 Lagerpunkte 118 angedeutet. Der Manipulator 120 ist in einer Werkzeugwechselposition und in einer Ruheposition gezeigt. Jedes der Radmagazine 110 verfügt über einen eigenen Antrieb (nicht dargestellt), der eine Drehbewegung des Radmagazins um seine Rundachse D1 bewirkt. Damit ist jedes Radmagazin 110 unabhängig von den anderen Radmagazinen 110 antreibbar um das Radmagazin 110 in eine gewünschte Drehposition zu bringen, in der das benötigte Werkzeug von einem Manipulator 120 entnommen werden kann.

Die drei nebeneinanderliegenden Freiplätze 113 ermöglichen einen Zugang 114, durch den der Manipulator 120 seitlich zu einem bestimmten Radmagazin 110 verfahren werden kann, um eine benötigtes Werkzeug 101 zu entnehmen bzw. zurückzulegen.

Damit der Manipulator 120 ein benötigtes Werkzeug aus dem Werkzeugmagazin 100 entnehmen kann, werden die folgenden Schritte ausgeführt: Angenommen, das gewünschte Werkzeug 101a befindet sich im dritten Werkzeugmagazin 110. In diesem Fall werden zunächst die zwei äußeren Radmagazine, die zwischen dem dritten Radmagazin 110a und dem Manipulator 120 entlang der Rundachse angeordnet sind, derart um die Rundachse D1 gedreht, dass ihre Freiplätze 113 an einer vorbestimmten Stelle bzgl. des Manipulators 120 ausgerichtet werden, um diesen einen seitlichen Zugang entlang der Rundachse zum dritten Radmagazin 110a zu ermöglichen. Vorzugsweise sind die Radmagazine mit den Freiplätzen bereits in dieser vorbestimmten Position als Grundstellung ausgerichtet, so dass nur immer dasjenige Radmagazin mit dem gewünschten Werkzeug gedreht werden muss, um das nächstbenötigte Werkzeug 101a in der Mitte des Zugangs 114 zu positionieren.

Anschließend wird der Manipulator 120 zur Entnahme des Werkzeugs 101a in Richtung der Rundachse D1 durch den Zugang 114 bis zum dritten Radmagazin 110a verfahren. Mit einer radialen Greifbewegung entkoppelt der Manipulator 120 das Werkzeug 101a, indem der Manipulator zuerst radial nach unten fährt, das Werkzeug an seinem Halterabschnitt mit einem Greifer 121a des Doppelgreifers umfasst und aus der Werkzeugaufnahme 112 entkoppelt. Anschließend wird die radiale Bewegung umgekehrt, um das Werkzeug anzuheben und anschließend seitlich aus dem Zugang herauszuführen. Das entnommene Werkzeug wird dann vom Manipulator 120 der Werkzeugspindel 202 zugeführt. Dies geschieht automatisiert und programmgesteuert. Je nach gewählter Halterung der Werkzeuge im Werkzeugrad kann der Manipulator 120 in Verbindung mit Freiplätzen auch nur mit einer Linearachse L2 ausgestattet sein, um mit nur einer Seitenbewegung die Werkzeuge aus der Radmagazin 110 zu entnehmen. Insbesondere in Kombination mit dem außenseitig angeordneten Manipulator, der zum Werkzeugwechsel nur zwischen der Arbeitsspindel 202 und dem Radmagazin 110 hin- und her verfahren wird, werden einfache, kurze Zustellwege und ein schneller Werkzeugwechsel ermöglicht. Wie zuvor erwähnt, wird hierzu das Radmagazin 110 so lange um seine Rundachse D1 gedreht, bis das zu entnehmende Werkzeug auf Höhe des Manipulators 120 positioniert ist, so dass der Manipulator 120 zum Greifen des Werkzeugs und zum Übergeben des Werkzeugs an die Spindel 202 im Idealfall lediglich eine horizontale Bewegung ausführen muss.

Mit der vorliegenden Ausführungsform ist insbesondere ein hauptzeitparalleles Rüsten möglich, bei dem eines der Radmagazine 110 aus dem Werkzeugmagazin 100 entnommen wird. Während das entnommene Radmagazin 110 neu bestückt wird, kann das System mit den anderen Radmagazinen 110 weiterarbeiten.

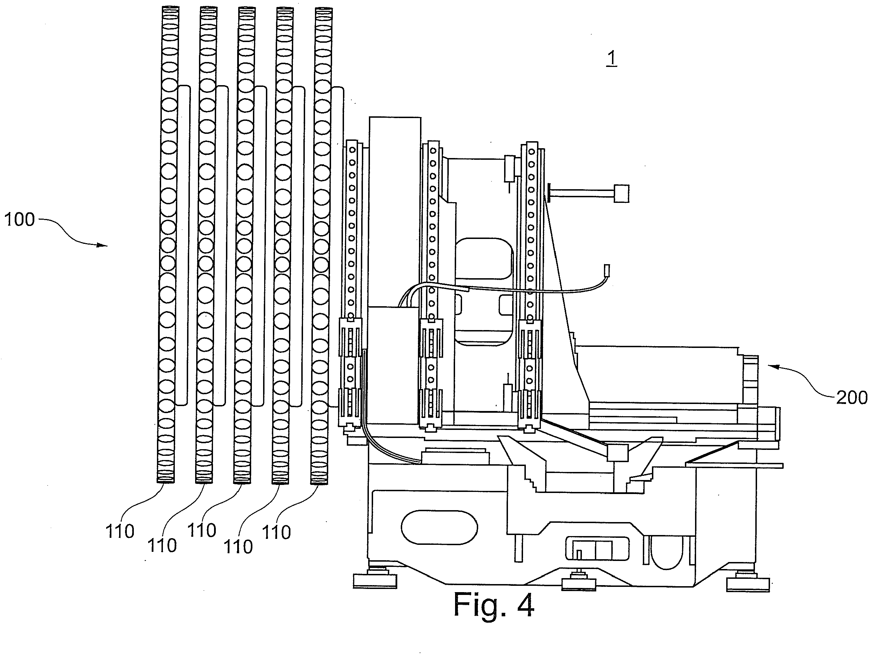

Fig. 4 zeigt das Ausführungsbeispiel mit fünf Radmagazinen in einer Vorderansicht. Die gezeigte Vorderansicht verdeutlicht die schmale Gesamtbreite des Gesamtsystems aus Werkzeugmaschine 200 und Werkzeugmagazin 100, die im vorliegenden Beispiel nur ca. 2,5 m beträgt. Ein Radmagazin hat hierbei eine Breite von nur 180 mm. Die Werkzeugmagazine 100 sind seitlich in Längsrichtung der Maschine 200 angeordnet, wobei die Radmagazine 110 senkrecht zu einer Bodenaufstandsfläche der Maschine angeordnet sind. Durch die aufrechte Anordnung der Radmagazine kann eine besonders vorteilhafte geringe Breitenabmessung des Gesamtsystems aus Maschine und Werkzeugmagazin realisiert werden. Mit jedem zusätzlichen Radmagazin 110 erhöht sich die Anzahl verfügbarer Werkzeugplätze um 60 Plätze, wobei sich die Breite des Werkzeugmagazins jedoch jeweils um nur 180 mm erhöht.

## Patentansprüche

1. System zum Wechseln und Vorlegen von Werkzeugen an einer Werkzeugmaschine, mit
mindestens n rotierbaren Werkzeugmagazinen (100) zur Aufnahme einer Mehrzahl von Werkzeugen (101), mit n ≥2, die in Richtung einer Rotationsachse hintereinander angeordnet sind; wobei mindestens eines der n Werkzeugmagazine (110) über einen Antrieb unabhängig von den anderen Werkzeugmagazinen (110) antreibbar ist, um eine Rotationsbewegung um die Rotationsachse auszuführen; und
einem Manipulator (120) zur Entnahme der Werkzeuge (101) aus dem Werkzeugmagazin (100);
wobei die Werkzeuge (101) in Werkzeugaufnahmen (112) entlang des Umfangs (111) der n Werkzeugmagazine (110) derart gehaltert sind, dass die Längsachsen (L1) der Werkzeuge (101) jeweils eines der n Werkzeugmagazine in einer Ebene liegen und vom Umfang (111) des Werkzeugmagazins abstehen, und die Werkzeuge (101) entlang des Umfangs (111) des jeweiligen Werkzeugmagazins (110) verfahren werden können, **dadurch gekennzeichnet, dass** die Werkzeugmagazine (110) mit Ausnahme höchstens desjenigen äußeren Werkzeugmagazins (110), das auf einer dem Manipulator (120) abgewandten Seite der Werkzeugmagazine (100) angeordnet ist, an einer Stelle des Umfangs einen Freiplatz (113) ohne Werkzeuge (101) aufweisen, und
dass zur Entnahme eines Werkzeugs im m-ten Werkzeugmagazin (110) zumindest die Werkzeugmagazine (110), die zwischen dem m-ten Werkzeugmagazin (110) und dem Manipulator (120) entlang der Rotationsachse (D1) angeordnet sind, derart um die Rotationsachse (D1) in eine vorbestimmte Position gedreht werden, dass ihre Freiplätze (113) entlang der Rotationsachse (D1) einen Zugang (114) des Manipulators (120) zum m-ten Werkzeugmagazin (110) durch seitliches Verfahren ermöglichen, und
wobei der Manipulator (120) derart eingerichtet ist, dass er zur Entnahme eines im m-ten Werkzeugmagazin (110) befindlichen Werkzeugs eine 2-Punkt-Linearbewegung durch den Zugang der Freiplätze ausführt, wobei der Manipulator von einer Park- oder Werkzeugübergabeposition seitlich außerhalb des Werkzeugmagazins höchstens bis zum m-ten Werkzeugmagazin entlang des Durchgangs der Freiplätze und zurück verfahren wird.

2. System nach Anspruch 1, **dadurch gekennzeichnet, dass** die n Werkzeugmagazine (100) derart angeordnet sind, dass die durch die Längsachsen (L1) der Werkzeuge (101) aufgespannten Ebenen senkrecht zu einer Bodenfläche ausgerichtet sind.

3. System nach Anspruch 1, **dadurch gekennzeichnet, dass** der Manipulator (120) derart eingerichtet ist, dass er zur Entnahme eines im m-ten Werkzeugmagazins (110) befindlichen Werkzeugs in Richtung der Rotationsachse (D1) durch den Zugang der Freiplätze bis zum m-ten Werkzeugmagazin (110) fährt.

4. System nach einem der Ansprüche 1 - 3, **dadurch gekennzeichnet, dass** die Werkzeugmagazine mit den Freiplätzen bereits der vorbestimmten Position als Grundstellung ausgerichtet sind, so dass für einen Werkzeugwechsel immer nur dasjenige Werkzeugmagazin mit dem gewünschten Werkzeug rotiert werden muss, um ein nächstbenötigtes Werkzeug in dem Zugangs (114) zu positionieren.

5. System nach einem der voranstehenden Ansprüche, **dadurch gekennzeichnet, dass** der Manipulator (120) mit einer radialen Greifbewegung das Werkzeug dem m-ten Radmagazin (110) entnimmt und durch den Zugang (114) wieder aus dem Werkzeugmagazin (100) seitlich herausfährt.

6. System nach einem der voranstehenden Ansprüche 1 - 5, **dadurch gekennzeichnet, dass** die Freiplätze unbestückte Werkzeugplätze sind.

7. System nach einem der voranstehenden Ansprüche, **dadurch gekennzeichnet, dass** die Werkzeuge (101) an einem ersten Längsende in den Werkzeugaufnahmen (112) aufgenommen sind und ein zweites gegenüberliegendes Längsende der Werkzeuge in Bezug auf den Umfang der n Werkzeugmagazine nach außen oder innen absteht und die Werkzeuge in dieser Position verriegelt sind.

8. System nach einem der voranstehenden Ansprüche, **dadurch gekennzeichnet, dass** die n Werkzeugmagazine (100) Radmagazine (110) sind, eine Drehbewegung um eine gemeinsame Rundachse (D1) ausführen und die Längsachsen (L1) der Werkzeuge (101) in radialer Richtung vom Umfang der Radmagazine (110) nach außen abstehen.

9. System nach Anspruch 8, **dadurch gekennzeichnet, dass** die Radmagazine jeweils ein drehbar gelagertes hohlzylinderförmiges Ringelement aufweisen, auf dessen äußeren Mantelfläche eine Lochstruktur zur Aufnahme der Werkzeuge vorgesehen ist.

10. System nach einem der Ansprüche 1 - 9, weiter umfassend eine Werkzeugmaschine mit einem Maschinengestell (201) und einem Maschinenbett (203), wobei die n Werkzeugmagazine (100) in Längsrichtung der Maschine (200) angeordnet ist.

11. Werkzeugmaschine zum Bearbeiten eines Werkstücks mit einer Werkzeugwechseleinrichtung zum Wechseln eines Werkzeugs an der Werkzeugmaschine und einem System zum Wechseln und Vorlegen von Werkzeugen an der Werkzeugmaschine nach zumindest einem der Ansprüche 1 - 10, wobei der Manipulator (120) der Werkzeugmagazine dazu geeignet ist, der Werkzeugwechseleinrichtung ein Werkzeug aus einem der Werkzeugmagazine zuzuführen.

## Claims

1. System for changing and presenting tools at a machine tool, having at least n rotatable tool magazines (100) for receiving a plurality of tools (101), with n ≥ 2, the tool magazines are arranged in series in the direction of a rotational axis, wherein at least one of the n tool magazines (110) is drivable by a drive independently of the other tool magazines (110) to perform a rotational movement about the rotational axis; and
a manipulator (120) for removing the tools (101) from the tool magazine (100);
wherein the tools (101) are held in tool receivers (112) along the circumference (111) of the n tool magazines (110) such that the longitudinal axes (L1) of the tools (101) of a respective one of the n tool magazines are located in a plane and project from the circumference (111) of the tool magazine, and the tools (101) can be moved along the circumference (111) of the respective tool magazine (110),
**characterized in that**
the tool magazines (110) comprise, at most with the exception of the outer tool magazine (110) that is arranged on a side of the tool magazines (100) opposite to the manipulator (120), in one position on the circumference a free place (113) without tools (101), and
that for the removal of a tool in the m-th tool magazine (110), at least the tool magazines (110) which are arranged between the m-th tool magazine (110) and the manipulator (120), along the rotational axis (D1), are rotated about the rotational axis (D1) into a predetermined position such that their free places (113) along the rotational axis (D1) provide access (114) for the manipulator (120) to the m-th tool magazine (110) by a sideways movement,
wherein the manipulator (120) is configured such that for the removal of a tool located in the m-th tool magazine (110), it performs a 2-point linear movement through the access of the free places, wherein the manipulator is moved from a parking position or tool transfer position sideways outside the tool magazine at the most until the m-th tool magazine along the passage of the free places and back.

2. System according to claim 1, **characterized in that** the n tool magazines (100) are arranged such that the planes spanned by the longitudinal axes (L1) of the tools (101) are oriented vertically to a floor surface.

3. System according to claim 1, **characterized in that** the manipulator (120) is configured such that for the removal of a tool located in the m-th tool magazine (110), it moves through the access of the free places until the m-th tool magazine (110) in the direction of the rotational axis (D1).

4. System according to any of claims 1 to 3, **characterized in that** the tool magazines with the free places are already aligned in the predetermined position as the basic position, so that for a change of a tool, in every time only the tool magazine with the required tool has to be rotated to position the next required tool in the access (114).

5. System according to any of the preceding claims, **characterized in that** the manipulator (120) removes the tool from the m-th wheel magazine (110) by a radial gripping movement and moves sideways again out of the tool magazine (100) through the access (114).

6. System according to any of the preceding claims 1 to 5, **characterized in that** the free places are unequipped tool places.

7. System according to one of the preceding claims, **characterized in that** the tools (101) are received in the tool receivers (112) at a first longitudinal end and a second opposite longitudinal end of the tools projects outwards or inwards in respect to the circumference of the n tool magazines and the tools are locked in this position.

8. System according to one of the preceding claims, **characterized in that** the n tool magazines (100) are wheel magazines (110), perform a rotational movement about a common rotational axis (D1), and the longitudinal axes (L1) of the tools (101) project outwards in a radial direction from the circumference of the wheel magazines (110).

9. System according to claim 8, **characterized in that** the wheel magazines, respectively, have a pivoted hollow cylindrical annular element, on the outer lateral surface of which a hole structure is provided to receive the tools.

10. System according to one of the preceding claims 1 to 9, further comprising a machine tool having a machine frame (201) and a machine bed (203), wherein the n tool magazines (100) are arranged in the longitudinal direction of the machine (200).

11. Machine tool for machining a workpiece, comprising a tool changing device for changing a tool at the machine tool and a system for changing and presenting tools at the machine tool according to at least one of claims 1 to 10, wherein the manipulator (120) of the tool magazines is capable of delivering a tool from one of the tool magazines to the tool changing device,

## Revendications

1. Système de changement et de présentation d'outils sur une machine-outil, comportant
au moins n magasins d'outils rotatifs (100) pour loger une pluralité d'outils (101), avec n ≥ 2, qui sont agencés les uns derrière les autres en direction d'un axe de rotation ; l'un au moins des n magasins d'outils (110) pouvant être entraîné par un entraînement indépendamment des autres magasins d'outils (110), afin d'exécuter un mouvement de rotation autour de l'axe de rotation ; et
un manipulateur (120) pour prélever les outils (101) dans le magasin d'outils (100) ;
les outils (101) étant retenus dans des logements d'outil (112) le long de la périphérie (111) des n magasins d'outils (110) de telle sorte que les axes longitudinaux (L1) des outils (101) respectivement de l'un des n magasins d'outils se situent dans un plan et font saillie de la périphérie (111) du magasin d'outils et que les outils (101) peuvent être déplacés le long de la périphérie (111) du magasin d'outils respectif (110),
**caractérisé en ce que**
les magasins d'outils (110) présentent à un emplacement de la périphérie un espace libre (113) dépourvu d'outils (101), exception faite au plus du magasin d'outils extérieur (110) qui est agencé sur le côté des magasins d'outils (100) détourné du manipulateur (120), et
pour prélever un outil dans le m^{ième} magasin d'outils (110), au moins les magasins d'outils (110) qui sont agencés entre le m^{ième} magasin d'outils (110) et le manipulateur (120) le long de l'axe de rotation (D1) sont tournés autour de l'axe de rotation (D1) jusque dans une position prédéterminée, de telle sorte que leurs espaces libres (113) le long de l'axe de rotation (D1) permettent un accès (114) du manipulateur (120) au m^{ième} magasin d'outils (110) par déplacement latéral, et
le manipulateur (120) est conçu de manière à exécuter un mouvement linéaire à 2 points par l'accès aux espaces libres pour prélever un outil situé dans le m^{ième} magasin d'outils (110), le manipulateur étant déplacé depuis une position de stationnement ou de remise d'outils latéralement à l'extérieur du magasin d'outils au maximum jusqu'au m^{ième} magasin d'outils le long du passage des espaces libres, et en retour.

2. Système selon la revendication 1, **caractérisé en ce que** les n magasins d'outils (100) sont agencés de telle sorte que les plans définis par les axes longitudinaux (L1) des outils (101) sont orientés perpendiculairement à une surface de sol.

3. Système selon la revendication 1, **caractérisé en ce que** le manipulateur (120) est conçu de manière à se déplacer en direction de l'axe de rotation (D1) par l'accès aux espaces libres jusqu'au m^{ième} magasin d'outils (110), afin de prélever un outil situé dans le m^{ième} magasin d'outils (110).

4. Système selon l'une des revendications 1 à 3, **caractérisé en ce que** les magasins d'outils ayant les espaces libres sont déjà orientés dans la position prédéterminée à titre de position de base, de sorte que pour un changement d'outils, il suffit toujours de tourner uniquement le magasin d'outils ayant l'outil désiré pour positionner un outil suivant nécessaire dans l'accès (114).

5. Système selon l'une des revendications précédentes, **caractérisé en ce que** le manipulateur (120) prélève l'outil dans le m^{ième} magasin à roue (110) par un mouvement de saisie radial et le déplace latéralement hors du magasin d'outils (100) par l'accès (114).

6. Système selon l'une des revendications 1 à 5, **caractérisé en ce que** les espaces libres sont des espaces à outil non équipés.

7. Système selon l'une des revendications précédentes, **caractérisé en ce que** les outils (101) sont logés dans les logements d'outils (112) à une première extrémité longitudinale, et une seconde extrémité longitudinale opposée des outils fait saillie vers l'extérieur ou vers l'intérieur par rapport à la périphérie des n magasins d'outils et les outils sont verrouillés dans cette position.

8. Système selon l'une des revendications précédentes, **caractérisé en ce que** les n magasins d'outils (100) sont des magasins à roue (110), exécutent un mouvement de rotation autour d'un axe rond commun (D1) et les axes longitudinaux (L1) des outils (101) font saillie vers l'extérieur en direction radiale depuis la périphérie des magasins à roue (110).

9. Système selon la revendication 8, **caractérisé en ce que** les magasins à roue présentent chacun un élément annulaire en forme de cylindre creux monté mobile en rotation, sur la surface enveloppe extérieure duquel est prévue une structure perforée pour loger les outils.

10. Système selon l'une des revendications 1 à 9, comprenant en outre une machine-outil pourvu d'un bâti de machine (201) et d'un banc de machine (203), les n magasins d'outils (100) étant agencés en direction longitudinale de la machine (200).

11. Machine-outil pour usiner une pièce à oeuvrer, comportant un dispositif de changement d'outil pour changer d'un outil sur la machine-outil et un système pour changer et présenter des outils sur la machine-outil selon l'une au moins des revendications 1 à 10, dans laquelle le manipulateur (120) des magasins d'outils est apte à amener un outil depuis l'un des magasins d'outils jusqu'au dispositif de changement d'outil.
